Europäisches Patentamt

**European Patent Office**

**Office européen des brevets**

(11) Veröffentlichungsnummer: **0 214 199 B1**

(12) **EUROPÄISCHE PATENTSCHRIFT**
veröffentlicht nach Art. 158 Abs. 3
EPÜ

(45) Veröffentlichungstag der Patentschrift: **10.07.91**

(51) Int. Cl.5: **B62D 65/00**, B23K 37/04

(21) Anmeldenummer: **86901381.3**

(22) Anmeldetag: **14.02.86**

(86) Internationale Anmeldenummer:
**PCT/EP86/00073**

(87) Internationale Veröffentlichungsnummer:
**WO 86/04871 (28.08.86 86/19)**

(54) VERFAHREN UND VORRICHTUNG ZUM AUTOMATISCHEN FÜGEN UND BEARBEITEN.

(30) Priorität: 22.02.85 DE 3506314

(43) Veröffentlichungstag der Anmeldung:
**18.03.87 Patentblatt 87/12**

(45) Bekanntmachung des Hinweises auf die
Patenterteilung:
**10.07.91 Patentblatt 91/28**

(84) Benannte Vertragsstaaten:
**DE IT SE**

(56) Entgegenhaltungen:
**DE-A- 2 810 822**
**DE-A- 3 144 686**
**FR-A- 2 383 318**
**FR-A- 2 483 285**

**See also references of WO8604871**

(73) Patentinhaber: **KUKA Schweissanlagen & Roboter GmbH**
**Blücherstrasse 144**
**W-8900 Augsburg(DE)**

(72) Erfinder: **ZIMMER, Ernst**
**Michael-Steinherr-Strasse 34**
**W-8904 Friedberg(DE)**

(74) Vertreter: **Ernicke, Hans-Dieter, Dipl.-Ing.**
**Schwibbogenplatz 2b**
**W-8900 Augsburg(DE)**

## Beschreibung

Die Erfindung betrifft ein Verfahren zum automatischen Fügen und Bearbeiten, insbesondere Zuordnen, Heften und Schweißen, von unterschiedlichen Fahrzeugkarosserien oder deren Baugruppen in einer Transferstraße sowie die dazu verwendeten umrüstbaren Bearbeitungsstationen entsprechend den Merkmalen im Oberbegriff des Verfahrens- und Vorrichtungshauptanspruches.

Ein solches Verfahren ist aus der DE-A-28 10 822 bekannt. Am Eingang einer Transferstraße zum Schweißen von Autokarosserien ist eine Rüststation vorgesehen. In dieser werden mehrere Metallblechelemente, die miteinander eine Karosseriebaugruppe bilden auf einer Palette in ihre Soll-Lage gebracht und in dieser Stellung auf der Palette vorläufig gespannt. Die Palette mit der lose zusammengesetzten Karosseriebaugruppe kommt dann in die nachgeordnete Bearbeitungsstation. Diese weist außer Schweißrobotern auch Seitengestelle mit Spannvorrichtungen auf, die mit den einzelnen Karosserieteilen in Eingriff treten, um deren endgültige Geometrie festzulegen. In der ersten Bearbeitungsstation werden die Karosserieteile anschließend durch Punktschweißen geheftet. In der nachfolgenden Bearbeitungsstation wird die geheftete Karosseriebaugruppe dann fertiggeschweißt.

Um in einer derartigen Transferstraße verschiedene Baugruppen, z.B. einen Karosserietyp in 2-türiger oder in 4-türiger Ausführung bearbeiten zu können, sind in der ersten Bearbeitungsstation mehrere Seitengestelle mit zum jeweiligen Karosserietyp passenden fest eingerichteten Spannvorrichtungen vorgesehen. Im einfachen Fall sind in der Bearbeitungsstation selbst zwei verschiedene Arten von Seitengestellen vorhanden, die bei Nichtgebrauch in Warteposition ausgerückt werden können. Daneben ist es auch möglich, über eine Fördereinrichtung und ein Lager eine größere Zahl von unterschiedlichen Seitengestellen zu bevorraten und diese bei Bedarf zuzuführen. Im weiteren sieht diese Schrift auch vor, ein Seitengestell für zwei ähnliche Typen von Karosseriebaugruppen tauglich zu machen, indem die Spannvorrichtungen für beide Typen am Seitengestell angebracht sind. Es werden dann selektiv die für den jeweiligen Typ benötigten Spannvorrichtungen angesteuert.

Für die Schweißarbeiten sind frei programmierbare Schweißroboter vorgesehen, die softwaremäßig auf die verschiedenen Baugruppentypen eingestellt werden können.

Die bekannte Transferstraße hat zum einen den Nachteil, daß sie durch die Reihenschaltung der einzelnen Arbeitsstationen eine relativ geringe Betriebssicherheit aufweist. Bei Ausfall einer Station in der Reihe stehen alle nachgeschalteten Stationen ebenfalls still.

Zum anderen muß für die Flexibilität der Transferstraße ein hoher hardwaremäßiger Aufwand betrieben werden. Für jeden Karosserietyp ist ein eigener Satz von Seitengestellen mit jeweils eigenen Spannvorrichtungen nötig. Nachdem die erste Bearbeitungsstation zum Heften und die zweite Bearbeitungsstation zum Fertigschweißen voneinander getrennt sind, ist zudem ein doppelt hoher Aufwand an Spannmitteln zu treiben. In der einfachen Ausführungsform ist die erste Bearbeitungsstation zudem nur begrenzt flexibel. Will man einen höheren Grad an Flexibilität erzielen, benötigt man eine platz- und kostenintensive Förderanlage und ein Lager.

Das DE-U-1 953 869 zeigt eine ähnliche Technik, wobei der Bearbeitungsstation ebenfalls eine bereits vormontierte Fahrzeugkarosserie auf einer Palette zugeführt wird. Die gezeigte Bearbeitungsstation ist zwar auf unterschiedliche Fahrzeugkarosserien umrüstbar, wobei ein Werkzeugtausch aber nur in Stillstandszeiten und auch nur manuell möglich ist. Die vorbekannte Bearbeitungsstation ist daher für eine flexible Transferstraße, in der verschiedene Karosserietypen im freien Mix bearbeitet werden, nicht geeignet.

Aus der DE-A-32 23 474 ist ferner noch ein Verfahren und eine Vorrichtung zum automatischen Montieren von Kassettenrecordern bekannt. Hierbei handelt es sich um Kleinteilmontagen, die mit den speziellen Problemen in Transferstraßen für Autokarosserien nicht vergleichbar sind.

Es ist daher Aufgabe der vorliegenden Erfindung, eine Transferstraße betriebssicherer zu machen und eine hohe Flexibilität der Transferstraße mit einfacheren Mitteln zu erreichen. Die Erfindung löst diese Aufgabe mit den Merkmalen in den Verfahrens- und Vorrichtungsansprüchen, 1 und 2 bzw. 3.

Im Gegensatz zum Stand der Technik, bei dem in der Bearbeitungsstation die bereits zusammengefügte und geheftete Baugruppe lediglich fertiggeschweißt wurde, werden im erfindungsgemäßen Verfahren auch die Funktionen der beiden vorgeschalteten Stationen, nämlich Rüsten und Fixieren, in der Bearbeitungsstation durchgeführt. Im Lager werden demnach die einzelnen Baugruppenteile nur noch lose auf einen Werkstückträger, im allgemeinen eine Palette, abgelegt und in ungefügtem Zustand in die Bearbeitungsstation gebracht. Hier werden sie automatisch gefügt und bearbeitet.

Der Begriff des Fügens beinhaltet generell das Zusammenbringen von zwei oder mehr Werkstücken geometrisch bestimmter Form und beinhaltet auch das Verbinden der Teile. In der Bearbeitungsstation werden die vorkommissionierten Baugruppenteile in die Fügeposition, d.h. die richtige Stellung zueinander, gebracht und dort gehalten. In der Fügeposition werden sie dann geheftet und/oder fertiggeschweißt. Je nach Anwendungsfall können die Baugrupenteile ohne vorheriges Heften gleich fertiggeschweißt werden. Desgleichen kann aber auch erst geheftet und dann fertiggeschweißt werden.

Die Erfindung bringt den Vorteil mit sich, daß durch die Vereinigung dreier Stationen in einer ein geringerer hardwaremäßiger Aufwand und Fabrikflächenverbrauch getrieben werden muß. Außerdem kann mit dem Heften ein Arbeitsgang eingespart werden. Soweit in einer Transferstraße aus Gründen des hohen Durchsatzes mehrere der erfindungsgemäßen Bearbeitungsstationen vorhanden sein müssen, können diese nunmehr auch parallel zueinander geschaltet sein mit der Folge, daß der Durchsatz der Transferstraße bei Ausfall einer Bearbeitungsstation nur relativ geringfügig beeinträchtigt ist.

Das erfindungsgemäße Verfahren basiert auf dem Grundgedanken, bei Wechsel des zu bearbeitenden Baugruppentyps mosaikartig einen völlig neuen Werkzeugsatz zusammenzustellen. Dies geschieht durch Austausch der einzelnen Werkzeuge in der Bearbeitungsstation. Damit ist ein wesentlich geringerer Aufwand als beim Stand der Technik erforderlich, da nur die Einzelwerkzeuge, d.h. die Spannvorrichtungen, Greifer, Schweißzangen etc. bevorratet werden müssen und nicht ein ganzer, für jeden Baugruppentyp einzeln zusammengestellter Werkzeugsatz. Einzelne Werkzeuge sind nämlich auch für verschiedene Baugruppentypen geeignet und brauchen dann gemäß der Erfindung nur einmal vorhanden zu sein.

Das erfindungsgemäße Verfahren und die Vorrichtung zu dessen Durchführung erlaubt eine praktisch unbegrenzte Flexibiltät der Bearbeitungsstation bzw. auch der ganzen Transferstraße bei relativ geringem Aufwand. Die Flexibilität ist nunmehr im wesentlichen nur noch eine Frage der Software und nicht mehr der Hardware.

Das erfindungsgemäße Verfahren und die zugehörige Vorrichtung sind in erster Linie für Schweiß-Transferstraßen geeignet. Der erfindungsgemäße Grundgedanke, die Arbeitsgänge, Fügen und Bearbeiten, in einer Station durchzuführen, kann aber auch auf anderen Gebieten Anwendung finden, z.B. in Montagestraßen oder in komplexen Bearbeitungsstraßen, in denen die Bearbeitungsvorgänge außer Schweißen aucg spanabhebende und spanlose Formgebung oder dergleichen umfassen. Desgleichen ist der Erfindungsgedanke nicht auf Transferstraßen beschränkt, sondern kann auch in Einzelstationen Verwendung finden.

In der erfindungsgemäßen Vorrichtung oder Bearbeitungsstation kann außer nach dem erfindungsgemäßen Verfahren auch nach dem Stand der Technik gearbeitet werden, indem bereits gefügte und geheftete Baugruppen lediglich fertigbearbeitet werden. Dabei können auch in sich schon gefügte, geheftete und anderweitig bereits vorbearbeitete Baugruppenteile, sogenannte Untergruppen, zusammen mit weiteren lose vorkommissionierten Teilen der Bearbeitungsstation zugeführt werden.

Die erfindungsgemäße Bearbeitungsstation beinhaltet mehrere, einzeln für sich dreidimensional bewegliche Werkzeugträger, die mit ihren Werkzeugen jeden beliebigen Punkt an der Baugruppe anfahren können. Die Werkzeugträger können mit unterschiedlichen Werkzeugen bestückt sein, beispielsweise Greifern oder Spannvorrichtungen, die für sich als Einzel- oder Satzwerkzeug ausgebildet sein können. Daneben können als Werkzeuge auch Schweißzangen, spanabhebende Werkzeuge, Montagewerkzeuge, wie Schrauber oder dgl. oder sonstige beliebige Werkzeugarten vorgesehen sein. Die Werkzeuge selbst können dabei auch weitere zusätzliche Achsen mit entsprechenden Antrieben aufweisen.

Die Werkzeugträger sind im Raum frei beweglich. Nach den gezeigten Ausführungsbeispielen besitzen die Werkzeugträger hierfür drei translatorische Freiheitsgrade. In anderen Ausführungsformen können sie aber auch weitere Freiheitsgrade oder auch zwei translatorische und einen rotatorischen Freiheitsgrad besitzen. Die Zahl und Art der Freiheitsgrade richtet sich in erster Linie nach den vom Werkstück, d.h. der Baugruppe kommenden Anforderungen.

Die Werkzeugträger sind einzeln für sich steuerbar und können mit ihren Werkzeugen jeden beliebigen Punkt an der Baugruppe erreichen. Die Steuerung der Bewegung der Werkzeugträger und der Funktion ihrer Werkzeuge erfolgt durch ein entsprechendes Programm. Gegenseitige Kollision der Werkzeugträger wird durch direkte oder übergeordnete steuerungstechnische Maßnahmen verhindert. Bei einem Wechsel der zu bearbeitenden Baugruppe wird das Steuerprogramm ausgetauscht. In vielen Fällen werden dann auch die Werkzeuge von den Werkzeugträgern gewechselt. Daneben ist es aber auch möglich, Universalwerkzeuge zu verwenden, die zur Handhabung und Bearbeitung unterschiedlicher Baugruppen geeignet sind. Damit ist dann nur ein Wechsel des Steuerprogramms notwendig, was einen sehr geringen, lediglich softwaremäßigen Aufwand bedeutet.

Die Werkzeugträger können in Gruppen zusammengefaßt und in einer oder mehreren Ebenen angeordnet sein. Innerhalb ihrer Gruppe besitzen sie nach wie vor die freie räumliche Beweglichkeit. Innerhalb der Gruppe bewegen sich die Werkzeugträger lediglich in der gleichen Ebene, d.h. sie haben zwei gleiche Achsen. Bezüglich der dritten und eventuell weiteren Achsen können die Werkzeugträger individuell verschieden sein.

In den gezeigten Ausführungsbeispielen sind für die Werkzeugträger zwei oder drei Bewegungsebenen vorgesehen. In anderen Ausführungsbeispielen können mehr oder weniger Ebenen vorhanden sein. Es empfiehlt sich, zumindest eine Bewegungsebene der Werkzeugträger parallel zur Ebene des Werkstückträgers, namentlich einer Palette, anzuordnen. In Variation zu den Ausführungsbeispielen kann der Werkstückträger auch in einer vertikalen oder schrägen Ebene bewegt werden, wonach zumindest eine Bewegungsebene der Werkzeugträger ebenfalls vertikal oder schräg ausgerichtet ist.

Das gezeigte Ausführungsbeispiel, in dem die Werkzeugträger in zwei parallelen Ebenen über und unter dem Werkstückträger verfahrbar sind, ermöglicht bereits eine sehr hohe Flexibilität, da durch entsprechende Werkzeuge jeder Punkt der Baugruppe von oben, von unten und von den Seiten her erreichbar ist. Für besondere Handhabungsaufgaben, z.B. ein Wenden oder Aufrichten einzelner Baugruppenteile kann entsprechend einem anderen Ausführungsbeispiel eine dritte oder auch eine vierte vertikale Bewegungsebene vorgesehen sein.

Gemäß den Ausführungsbeispielen sind die Werkzeugträger wie die Laufkatzen eines Kranes auf einer Quertraverse verfahrbar, die ihrerseits auf zwei Längstraversen hin- und herfahren kann.

In Variation dazu ist es auch möglich, beispielsweise die Werkzeugträger mit einem lenkbaren Fahrgestell auszurüsten und sie auf dem Boden der Bearbeitungsstation unabhängig voneinander zu verfahren.

Gemäß den Ausführungsbeispielen empfiehlt es sich, an jeder Quertraverse zumindest zwei Werkzeugträger an gegenüberliegenden Seiten anzuordnen. Diese können dann entlang der Quertraverse verfahren, ohne sich gegenseitig zu behindern. Auf einer Quertraverse können aber auch noch weitere Werkzeugträger angeordnet sein.

Desgleichen können ein oder mehrere Quertraversen in den verschiedenen Bewegungsebenen vorgesehen sein.

Um die Werkzeugträger mit ihren Werkzeugen genau positionieren zu können, empfiehlt es sich, für die Antriebe der drei Bewegungsachsen exakte Stelltriebe, vorzugsweise in Form von Schrittmotoren oder Scheibenläufern in Verbindung mit spielfreien Zahnriemen - oder Zahnstangentrieben zu verwenden.

Die Werkzeugträger sollen mit allen Werkzeugen kuppelbar sein. Um das zu ermöglichen, sind genormte Kupplungen vorgesehen, die Anschlüsse für die Betriebsmittel der Werkzeuge, wie Strom, Kühlwasser, Druckluft, Hydrauliköl etc. aufweisen. Über die Kupplungen müssen auch Steuersignale und Energie für zusätzliche Antriebe in den Werkzeugen übertragen werden. Die Betriebsmittel werden je nach ihrer Art den Werkzeugträgern über Schleppleitungen, Schleifkontakte etc. zugeführt. An der Kupplung jedes Werkzeugträgers sind daher Anschlüsse für alle in der Bearbeitungsstation verwendeten Betriebsmittel vorhanden. An der Kupplung des Werkzeugs hingegen sind nur die Anschlüsse für die einzelnen vom Werkzeug benötigten Betriebsmittel vorgesehen. Alle Kupplungen sind als Steckkupplungen, mit selbstverschliessenden Anschlüssen bei flüssigen und gasförmigen Medien, ausgebildet, die sich erst bei Verbindung mit dem Gegen-Anschlußstück öffnen. Auf diese Weise bleiben an der Werkzeugträgerkupplung die nicht benötigten Betriebsmittel-Anschlüsse geschlossen. Zur Verbindung der beiden Kupplungsteile von Werkzeug und Werkzeugträger weisen diese eine Bajonett-Gewindeanordnung auf, die vom Werkzeugträger her in Drehung versetzt wird. Die Werkzeugträger können sich damit selbsttätig die Werkzeuge holen und wieder abgeben.

Die zweiteilig ausgebildete, werkzeugträgerseitige Kupplung weist zwischen dem Außenteil und dem darin drehbar gelagerten Innenteil eine lösbare Arretierung auf, die zum Drehen der Bajonett-Gewindeanordnung ausrückbar ist und die andererseits die im Betrieb des Werkzeugs auftretende Torsionskräfte überträgt. Für geringe Torsionskräfte genügt eine federbelastete Kugelarretierung. Für höhere Kräfte ist mindestens ein gesteuerter Arretierbolzen vorgesehen, der eine voll belastbare, formschlüssige Verbindung schafft. Es ist aber auch eine Kombination beider Arretiermittel möglich.

Der Werkzeugträger kann eine oder mehrere Kupplungen aufweisen, die auf dem entsprechend dimensionierten Trägerkopf angeordnet sind. Damit kann ein Werkzeugträger mit mehreren unterschiedlichen Werkzeugen ausgerüstet sein, die zusammenarbeiten oder die zum Teil in Bereitschaft gehalten werden, um Werkzeugwechselzeiten zu sparen. Desgleichen kann damit ein mehrteiliges Satzwerkzeug verwendet werden, das durch seine Aufteilung und die getrennte Ablage der Einzelteile weniger Platz im Werkzeugmagazin benötigt.

Für die Speicherung der gerade nicht benötigten Werkzeuge besitzt die Bearbeitungsstation ein oder mehrere Werkzeugmagazine. Vorzugsweise ist dabei jeder Gruppe von Werkzeugträgern, die sich in einer gemeinsamen Ebene bewegen, ein oder zwei Werkzeugmagazine zugeordnet. Im einfachsten Fall sind die Werkzeugmagazine starr und bestehen lediglich aus einer Reihe von Werkzeugaufnahmen, zu denen die Werkzeugträger hinfahren und ihre Werkzeuge abgeben oder holen.

Um den Werkzeugwechsel zu beschleunigen und die Rüstzeiten zu verkürzen, können bewegliche Werkzeugmagazine vorgesehen sein, die gegenüber den Werkzeugträgern verfahren. Damit wird das Werkzeugmagazin gegenüber dem zu beschickenden Werkzeugträger positioniert, und im Werkzeugmagazin wird die Werkzeugaufnahme mit dem gerade benötigten Werkzeug in die Übergabestellung bewegt.

Gegenüber den gezeigten Ausführungsbeispielen sind weitere Variationen der Werkzeugmagazine möglich, indem beispielsweise mehrachsig bewegliche Werkzeugmagazine oder auch ortsfest angeordnete, aber in sich bewegliche Werkzeugmagazine, wie Revolvermagazine etc. vorgesehen sind.

Magazine in der vorbeschriebenen Art können auch für die Zuführung von benötigten Kleinteilen, z.B. für die Bestückung von Schraubern, vorgesehen sein.

Erfindungsgemäß werden als Werkstückträger Paletten mit Lagerarmen verwendet, auf denen die Baugruppeneinzelteile nebeneinander abgelegt sind. Um diese Teile beim Palettentransport sicher zu halten, sie andererseits aber mit den Werkzeugträgern ohne großen Kraftaufwand entnehmen und transportieren zu können, empfiehlt es sich, Schnappverbindungen zwischen den Lagerarmen und den Baugruppen-Einzelteilen vorzusehen.

Es ist aber auch möglich, Baugruppen-Einzelteile lose aufeinander abzulegen. Die Teile können dabei auch bereits ihre Fügeposition einnehmen.

Die erfindungsgemäße Bearbeitungsstation erlaubt die kostengünstige Verwendung von einfachen Paletten mit relativ ungenauen Einfach-Aufnahmen für die Baugruppenteile. Die exakte Positionierung der Baugruppenteile in der Bearbeitungslage wird durch die Werkzeugträger mit entsprechend genauen Zentrier- und Spannwerkzeugen vorgenommen. Um eine Funktionsbeeinträchtigung der Werkzeugträger bei den gleichzeitig ablaufenden Handhabungs-, Spann- und Bearbeitungsvorgängen zu verhindern, empfiehlt es sich, die Baugruppenteile im peripheren Bereich der Palette abzulegen und dadurch den Innenraum der Palette für die vorgenannten Vorgänge freizuhalten.Die Lagerarme behindern dann auch nicht die Werkzeugträger in ihren Bewegungen.

Die erfindungsgemäße Bearbeitungsstation ist in der gezeigten Konfiguration in der Lage, mit ihren Werkzeugträgern sämtliche Handhabungs-; Spann- und Bearbeitungstätigkeiten auszuführen. Für besondere Aufgaben ist es aber auch möglich, ergänzend Industrie-Roboter vorzusehen, die von außen her in die Bearbeitungsstation eingreifen und zusätzliche Handhabungs-, Spann- oder Zuführaufgaben wahrnehmen.

Die Erfindung ist in den Zeichnungen beispielsweise und schematisch dargestellt. Im einzelnen zeigt:

Fig. 1; einen Schemaplan einer Transferstraße mit drei Bearbeitungsstationen,

Fig. 2: einen Werkstückträger mit einer aus mehreren Einzelteilen bestehenden Baugruppe,

Fig. 3: einen Längsschnitt durch eine Bearbeitungsstation,

Fig. 4: einen Querschnitt durch eine Bearbeitungsstation gemäß Schnittlinie IV-IV aus Fig. 3,

Fig. 5: eine Draufsicht auf eine Bearbeitungsstation gemäß den Fig. 3 und 4 mit einem Werkstückträger und einer Baugruppe in Variation zu Fig. 2,

Fig. 6: eine Seitenansicht der Bearbeitungsstation in Variation zu Fig. 3 ,

Fig. 7: ein Querschnitt durch eine Bearbeitungsstation gemäß Schnittlinie VII-VII aus Fig. 6,

Fig. 8: einen Längsschnitt durch eine Kupplung zwischen Werkzeug und Werkzeugträger und

Fig. 9: einen Querschnitt durch eine Bearbeitungsstation in Variation zu Fig. 4.

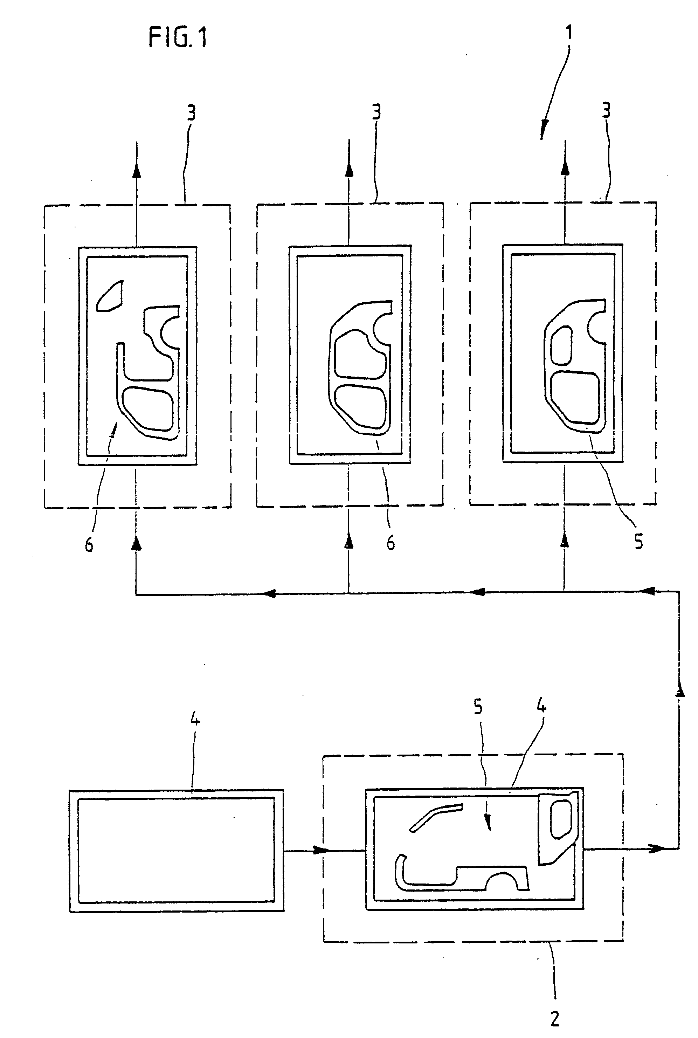

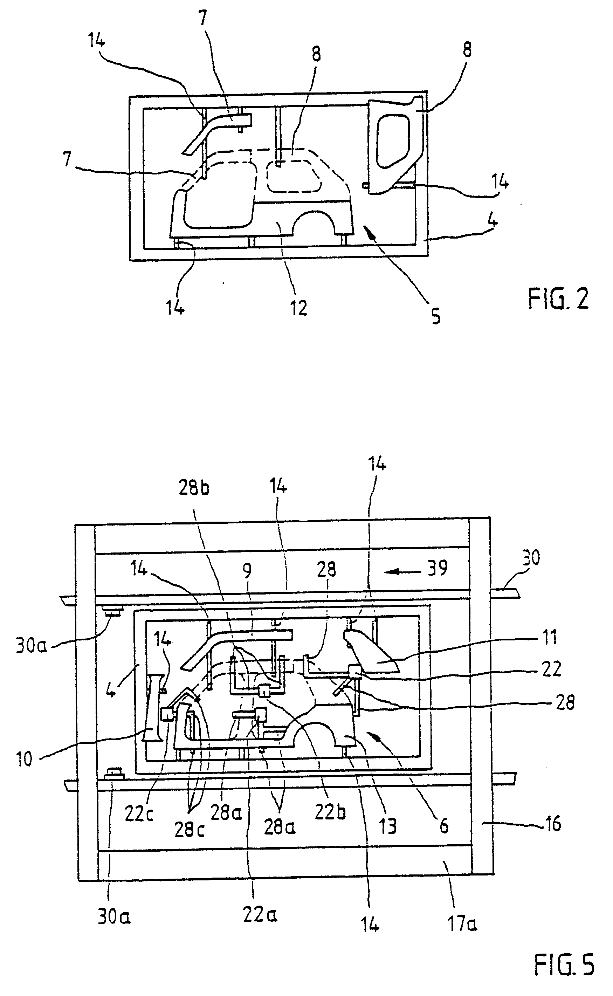

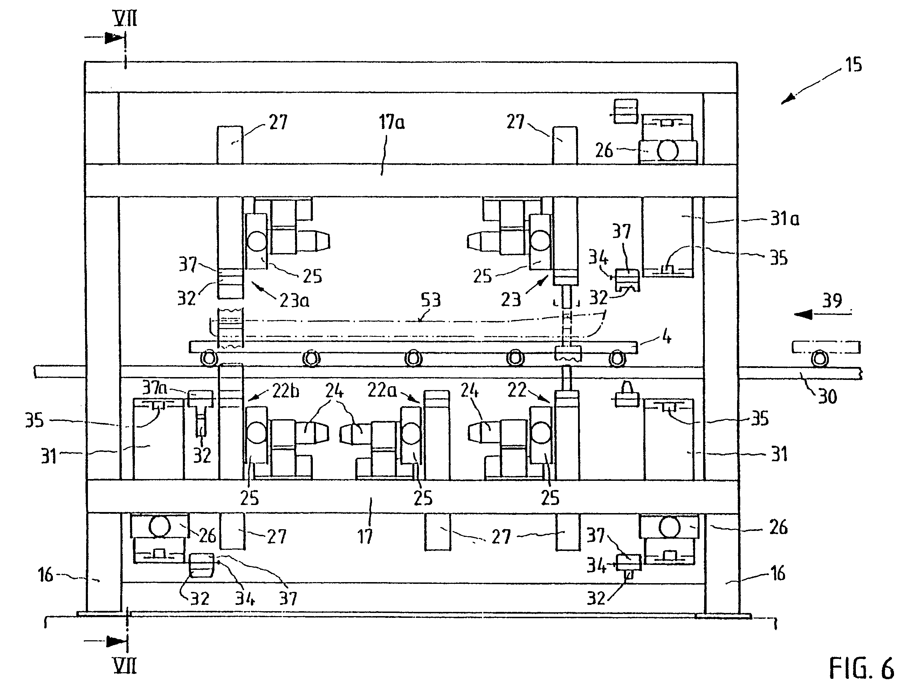

In Fig. 1 ist teilweise und schematisch eine Transferstraße 1 zur Herstellung von Fahrzeugkarosserien dargestellt. In eine Rüststation 2 eines Lagers werden leere Werkstückträger 4, im nachfolgenden als Paletten bezeichnet, gebracht. In der Rüststation werden die Einzelteile der zu schweißenden Baugruppen 5,6 lose und nebeneinander auf die Palette 4 abgelegt. Die Baugruppen 5,6 stellen in diesem Fall entsprechend den Fig. 2 und 5 die Seitenwände einer FahrzeugKarosserie dar. Im dargestellten Ausführungsbeispiel werden in der Transferstraße 1 zwei verschiedene Baugruppentypen 5,6 im freien Mix bearbeitet. Die Baugruppe 5 stellt die zweitürige Seitenwand und die Baugruppe 6 die viertürige Seitenwand des gleichen Fahrzeugtyps dar. In Variation dazu können aber auch die Baugruppen völlig unterschiedlicher Fahrzeugtypen in der Transferstraße 1 bearbeitet werden. Hinsichtlich Zahl und unterschiedlicher Gestaltung der verschiedenen Baugruppen ist die Transferstraße 1 von unbegrenzter Flexibilität.

Die Paletten 4 werden aus der Rüststation 2 zu jeweils einer der drei parallel nebeneinander angeordneten Bearbeitungsstationen 3 gebracht. In den Bearbeitungsstationen 3 werden die Baugruppeneinzelteile von ihren Ablagepositionen auf der Palette entnommen und in eine Fügestellung zueinander gebracht und gehalten. Anschließend werden die Baugruppenteile in ihrer endgültigen Lage zueinander zentriert und gespannt sowie geschweißt oder anderweitig bearbeitet. Die fertiggestellten Baugruppen werden dann auf ihren Paletten 4 aus den Bearbeitungsstationen 3 abtransportiert und auf neuen Paletten mit anderen Karosserieteilen neu zusammengestellt oder auch zwischengelagert oder anderweitig behandelt.

Fig. 1 zeigt in den beiden rechten Bearbeitungsstationen 3 Paletten 4 mit unterschiedlichen Baugruppen 5,6 im bereits fertiggeschweißten Zustand. In der linken Bearbeitungsstation 3 ist eine Baugruppe 6 erst zum Teil fertiggestellt.

Fig. 2 zeigt eine Palette 4 mit einer Baugruppe 5 in Form einer zweitürigen Seitenwand. Die Baugruppe 5 besteht aus mehreren Einzelteilen, die miteinander zu verschweißen sind. Es handelt sich hierbei um einen vorderen Dachholm 7, einen hinteren Dachholm 8 und ein Bodenteil 12 einer zweitürigen Seitenwand eines Kraftfahrzeuges. In Fig 2 ist gestrichelt die Lage der Einzelteile nach dem Fertigschweißsen gezeigt.

Die Palette 4 weist einen geschlossenen Rahmen auf, von dem in das freie Innere Lagerarme 14 vorragen, auf denen die Einzelteile 7,8,12 abgelegt und gehalten sind. Die Dachholme 7,8 müssen zum Verschweißen mit dem Bodenteil 12 aus ihrer Ablageposition neben dem Bodenteil 12 entnommen und letzterem zugeordnet werden. Um eine leichte Entnahme zu ermöglichen, sind die Dachholme 7,8 auf den Lagerarmen 14 über Schnappverbindungen lösbar gehalten. Die Einzelteile 7,8,12 sind in Randnähe auf der Palette 4 abgelegt, die im weiteren ausreichend groß dimensioniert ist, um damit einen relativ großen, von Lagerarmen freien Innenraum zu bilden. Die Lagerarme 14 sind als relativ ungenaue Einfach-Aufnahmen ausgebildet und üben für die Einzelteile 7,8,12 lediglich eine Stütz- und Haltefunktion ohne genaue Justierung aus. Nachdem der Transport und die genaue Zentrierung und Spannung der Einzelteile in der Bearbeitungsstation vorgenommen werden, genügen nur wenige Lagerarme 14, die die Einzelteile 7, 3,12 lediglich stützen. und für die Werkzeugträger greifund spannbar halten. Dabei können die Einzelteile 7,8,12 in ihrer Ablagestellung ohne Schaden auch durchhängen oder sich anderweitig elastisch verformen. Wie Fig. 2 zeigt, weist die Palette 4 anfangs noch freie Lagerarme 14 auf, die später die fertigbearbeitete Baugruppe stützen.

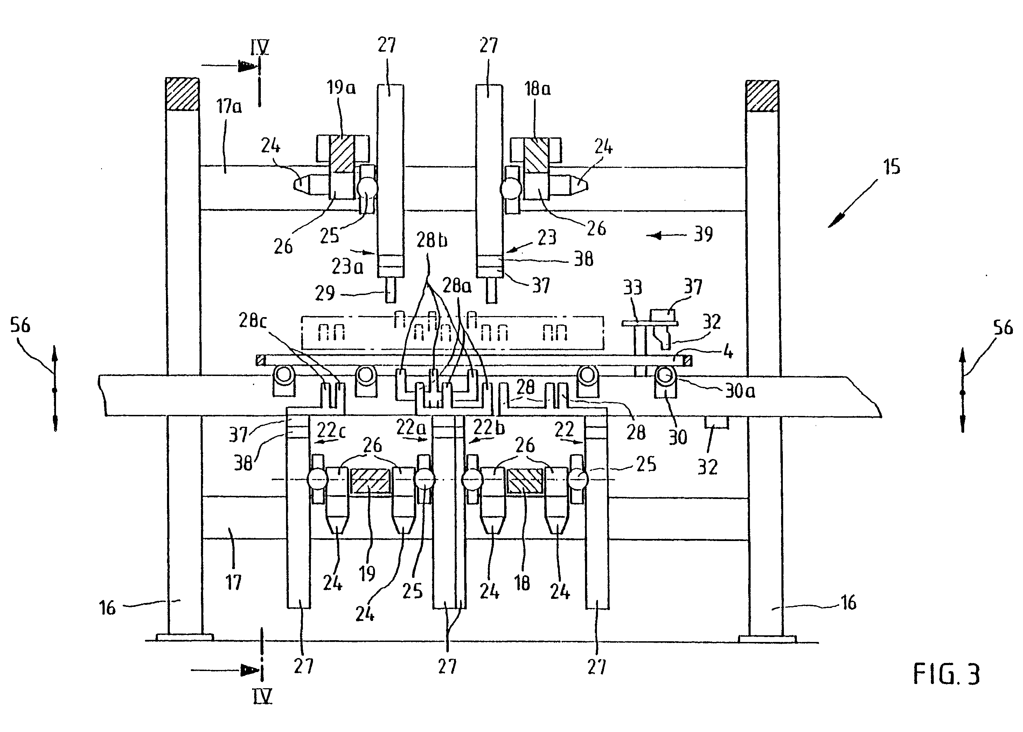

Fig. 3 zeigt eine Bearbeitungsstation in teilweise abgebrochener Seitenansicht. Der Pfeil 39 gibt dabei die Transportrichtung an, in der die Paletten 4 die Bearbeitungsstation 3 durchlaufen.

Wie aus Fig. 3, 4 und 5 ersichtlich, weist die Bearbeitungsstation 3 ein Maschinengestell 15 auf, das im wesentlichen aus vier, im Rechteck gestellten, vertikalen Stützpfosten 16 besteht, die in Transportrichtung 39 beiderseits der Palette 4 durch jeweils ein Paar Längstraversen 17, 17a miteinander verbunden sind. Im weiteren sind die Pfosten 16 oben durch eine Querverbindung unter Bildung eines Portales abgestützt. Die Paletten 4 werden auf einer Rollbahn bewegt, die die einzelnen Stationen der Transferstraße miteinander verbindet. In die Bearbeitungsstation 3 ist dazu eine in Längsrichtung sich erstreckende und seitlich nach innen vorspringende Palettenführung 30 mit Rollen 30 a vorgesehen. Im weiteren sind nicht dargestellte Zentriermittel zum Fixieren der Palette in einer vorbestimmten Lage gegenüber der Bearbeitungsstation 3 vorgesehen. Der Antrieb für die Bewegung der Paletten ist ebenfalls nicht dargestellt. Es können z.B. die Rollen 30 a drehend angetrieben sein. Die Längsträgerpaare 17,17a sind mit Abstand unter bzw. über der Palettenführung 30 und der aufgelegten Palette 4 angeordnet. Die beiden unteren Längstraversen 17 bilden die Laufbahn für zwei längsbewegliche Quertraversen 18,19. In gleicher Art sind auf den beiden oberen Längstraversen 17 a zwei Quertraversen 18 a,19 a längsverfahrbar gelagert. Die Quertraversen 18,19,18a,19a weisen jeweils Laufwerke 21 zur Führung auf ihren Längstraversen 17,17a, sowie einen exakten Stelltrieb 20 auf. Der Stelltrieb 20 besteht aus einem weggesteuerten Elektromotor, vorzugsweise einem Schrittmotor oder Scheibenläufer, der über einen spielfreien Zahnriemen - oder Zahnstangentrieb seine Quertraverse antreibt.

Die hierfür verwendeten Zahnriemen- oder Zahnstangentriebe sind mit einer Abdeckung versehen und sind Gegenstand der älteren, nicht vorveröffentlichten, nationalen deutschen Patentanmeldung P 34 20 936.0 (& WO-A- 85/05586). Auf den Quertraversen 18 bis 19a sind Werkzeugträger 22,22a, 22b,22c,23 und 23 a quer zur Transportrichtung 39 verfahrbar gelagert. Die Werkzeugträger 22 bis 22c sind voneinander unabhängig beweglich und bilden eine Gruppe, die in einer gemeinsamen, horizontalen Ebene mit Abstand unterhalb und parallel zur Hauptebene der Palette 4 verfahrbar sind. Desgleichen bilden die oberen Werkzeugträger 23,23a ebenfalls eine Gruppe, die in einer zweiten horizontalen Bewegungsebene mit Abstand oberhalb und parallel zur Hauptebene der Palette 4 verfahrbar ist.

An den Quertraversen 18,19 sind jeweils zwei Werkzeugträger 22 und 22b sowie 22a und 22c an jeweils gegenüberliegenden Seiten über Laufwerke 26 spielfrei geführt und gelagert. Im Gegensatz dazu ist an den oberen Quertraversen 18a,19a jeweils nur ein Werkzeugträger 23,23a über entsprechende Laufwerke 26 gelagert.

Im dargestellten Ausführungsbeispiel sind die Quertraversen 16 bis 19a als Balken ausgebildet, an denen die Werkzeugträger fliegend gelagert sind. Daneben ist es auch in Variation möglich, die Quertraverse durch zwei parallele und voneinander distanzierte Balken in Form einer Brücke auszubilden und zwischen diesen die Werkzeugträger beidseitig zu lagern und zu führen.

Die Werkzeugträger 22 bis 23a werden jeder für sich in gleicher Weise wie die Quertraversen 18 bis 19a über weggesteuerte Stelltriebe 24 spielfrei angetrieben.

Die Werkzeugträger 22 bis 23a sind damit in der Horizontalen in zwei Achsen unter bzw. über der Palette 4 frei verfahrbar und können exakt positioniert werden.

Um im Raum freibeweglich zu sein, besitzen die Werkzeugträger 22 bis 23 a in sich eine dritte, vertikale Bewegungsachse. Dazu weisen die Werkzeugträger 22 bis 23a jeweils einen Trägerkopf 27 auf, der über einen exakten, weggesteuerten Stelltrieb 25 in der Höhe verstellbar ist.

In Variation dazu kann die dritte Bewegungsachse für die Werkzeugträger auch anders gebildet sein, beispielsweise durch einen Schwenkkopf oder durch eine Höhenverstellbarkeit der Längstraversen 17,17a.

Die Werkzeugträger 22 bis 23a tragen über automatische Kupplungen 37,38 austauschbare Werkzeuge 28,28a,28b,28c,29, 54 oder 29a,32,55. Im dargestellten Ausführungsbeispiel sind die Werkzeuge 28 bis 28c als zentrierende Spannrichtungen mit jeweils mehreren Einzelspannern, die mit den Einzelteilen 9,10,11,13 der Baugruppe 6 in Eingriff treten. In Fig. 5 ist dabei in Variation zu Fig. 2 eine Baugruppe 6 in Form einer 4-türigen Seitenwand-Version eines Kraftfahrzeuges dargestellt.

Die beiden oberen Werkzeugträger 23,23a sind demgegenüber mit jeweils einer Punkt-Schweißzange 29,29a bzw. mit Greifern 54 und 55 ausgerüstet.

Die Funktion der Werkzeugträger 22 bis 23a ist nun wie folgt:
Die unteren Werkzeugträger 22, 22a und 22c heben mit wenigstens einem Einzelspanner ihre Spannvorrichtungen 28,28a, 28c das Bodenteil 13 um ein bestimmtes, programmiertes Maß nach oben aus den Lagerarmen 14 der Palette 4 (siehe Fig. 3). Desgleichen fährt auch der Werkzeugträger 22b mit seiner noch leeren Spannvorrichtung 28b nach oben. Die Werkzeugträger 22 bis 22c befinden sich dann alle schon in der endgültigen Arbeitsposition.

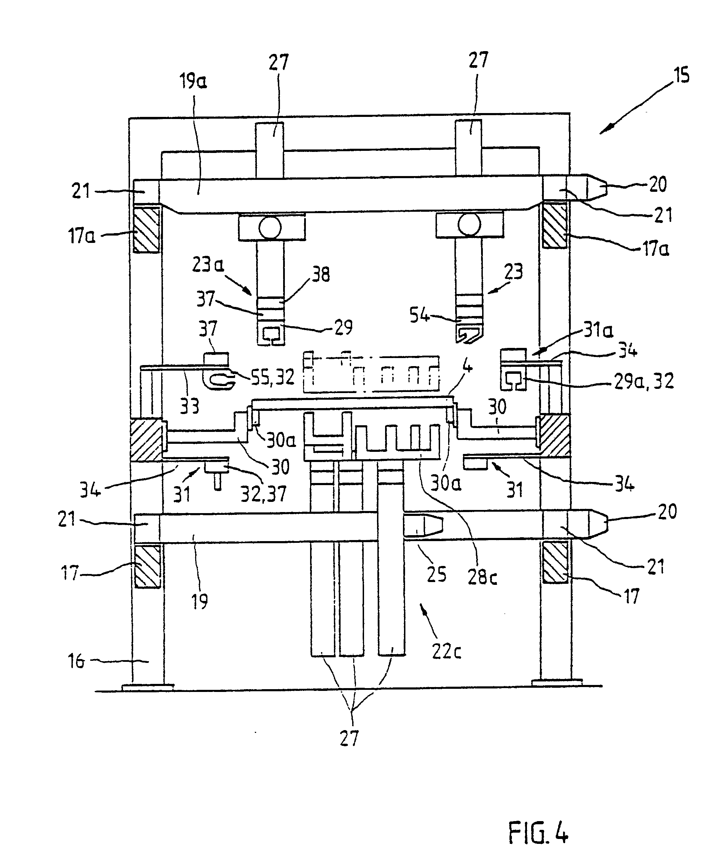

Der obere Werkzeugträger 23 holt mit seinem Greifer 54 den hinteren Dachholm 11 von seiner Ablageposition auf der Palette 4, bringt ihn in die in Fig. 5 gestrichelt gezeichnete Position gegenüber dem Bodenteil 13 und legt den Dachholm 11 zum Bodenteil 13 und in die beiden noch freien Einzelspanner der Spannvorrichtung 28. In gleicher Weise legt der andere obere Werkzeugträger 23a mit dem gegen die Schweißzange 29 (Fig. 4) gewechselten Greifer 55 den Türholm 10 zum Bodenteil 13 und in den noch freien Einzelspanner der Spannvorrichtung 28a und einen freien Einzelspanner der Spannvorrichtung 28b. Anschließend faßt der nach dem Ablegen des Dachholmes 11 wieder freie Werkzeugträger 23 mit seinem Greifer 54 den vorderen Dachholm 9 und legt ihn in die noch freien Einzelspanner der Spannvorrichtungen 28b und 28c. Nach dem Schließen aller Spannvorrichtungen 28 bis 28c haben die Einzelteile 9 biS 11, 13 die richtige Lage zueinander und können an den Nahtstellen verschweißt werden. Dafür werden an den oberen Werkzeugträgern 23, 23a die Greifer 54,55 gegen die Schweißzangen 29, 29a gewechselt. Damit kann in der Bearbeitungsstation ohne vorheriges Heften die Baugrupe fertiggeschweißt werden.

Nach dem Fertigschweißen öffnen die Spanner und die Werkzeugträger 22 bis 22c senken sich mit der angelegten Baugruppe 6 so weit ab, bis diese auf ihren Lagerarmen 14 auf der Palette 4 abgelegt ist. Die Werkzeugträger 22 bis 22c senken sich dann noch weiter ab, bis sie mit ihren Werkzeugen den Bewegungsbereich der Palette 4 freigegeben haben.

In Variation dazu kann auch die Palette 4 über eine Hubeinrichtung 56 (Fig. 3) gegenüber den in Arbeitsstellung vorpositionierten Spannvorrichtungen 28 bis 28c gesenkt werden, wobei das Bodenteil 13 über die offenen Spannvorrichtungen 28,28a,28c gestreift wird und sich dabei selbst zentriert. Nach dem Schweißen wird die Palette 4 dann wieder unter Aufnahme der kompletten Baugruppe 6 angehoben.

Im dargestellten Ausführungsbeispiel wird von den Werkzeugträgern 22 bis 22c der unteren Bewegungsebene zusammen ein Komplettes Zentrier- und Spannbett für die zu verschweissenden Baugruppenteile 9,10,11 und 13 gebildet. Die Werkzeugträger 23,23a der oberen Bewegungsebene übernehmen dann die Transport- und Bearbeitungsaufgaben.
In anderen Anwendungsfällen Kann die Zuordnung der Funktionen anders gewählt sein. So können auch die verschiedenen Aufgaben nicht nur nach Bewegungsebenen aufgeteilt, sondern auch innerhalb der Bewegungsebenen auf einzelne Werkzeugträger verteilt werden.

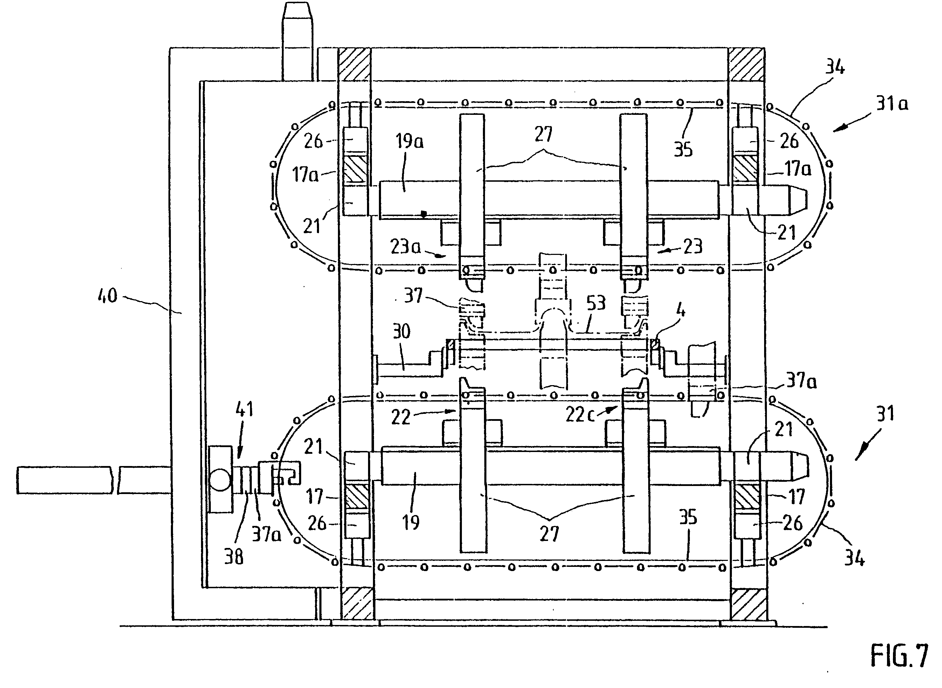

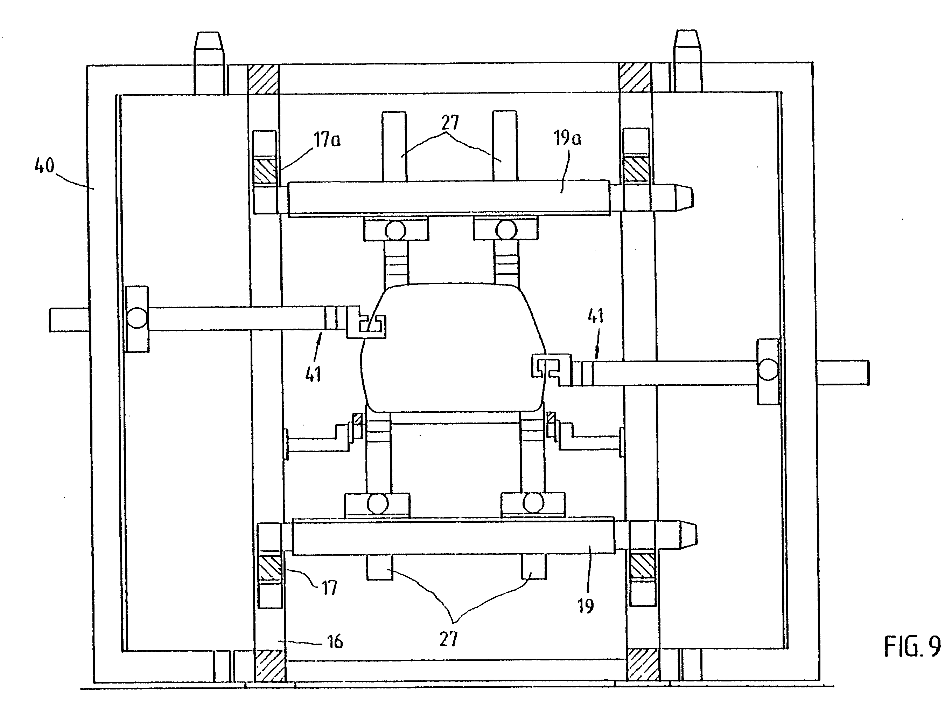

Wie aus Fig. 7 und 9 ersichtlich,kann für komplizierte Handhabungs-und Bearbeitungsaufgaben eine dritte oder auch eine vierte Bewegungsebene für weitere, horizontal ausgerichtete Werkzeugträger 41 vorgesehen sein. In diesem Fall sind die Werkzeugträger 41 an einer oder mehreren Hochtraversen 40 in der Höhe verfahrbar, während die Hochtraversen 40 in Längsrichtung an entsprechenden Längstraversen beweglich gelagert sind. Eine solche Ausführungsform empfiehlt sich vor allem dann, wenn Baugruppenteile in der Vertikalen um eine Strecke bewegt werden müssen, die größer als der längstmögliche Höhenvorschub der horizontal verfahrbaren Werkzeugträger ist oder wenn es sich um Baugruppen mit seitlich hoher Flächenausdehnung handelt, wie z.B. ganze Fahrzeugkarosserien (Fig. 9). Grundsätzlich ist es auch möglich, daß Werkzeugträger in der gleichen oder auch in verschiedenen Bewegungsebenen gegenseitig zuarbeiten und beispielsweise für eine Schwenkbewegung ein Teil erst anheben und dann an einen anderen Werkzeugträger übergeben.

Die geforderte Flexibilität der Bearbeitungsstation 3 erfordert in den meisten Fällen bei einem Baugruppenwechsel neben einem Wechsel des Steuerprogramms für die Bewegung der Werkzeugträger auch einen Austausch ihrer Werkzeuge. Hierfür sind in der Bearbeitungsstation 3 mehrere Werkzeugmagazine 31,31a vorgesehen. Im Ausführungsbeispiel der Fig. 3 bis 5 ist den oberen Werkzeugträgern 23,23a ein oberes Werkzeugmagazin 31a und den unteren Werkzeugträgern 22 bis 22c zwei untere Werkzeugmagazine 31 zugeordnet. Die Werkzeugmagazine 31,31a bestehen jeweils aus einer Reihe von Werkzeugaufnahmen 34, die in Längsrichtung 39 starr auf bzw. unter dem Palettenträger 30 befestigt sind. Die Werkzeugaufnahmen 34 ragen von der Seite her in die Bearbeitungstation 3 vor. Zum Werkzeugtausch müssen die Werkzeugträger die Werkzeugaufnahmen 34 anfahren, an einer freien Stalle das nicht mehr benötigte Werkzeug absetzen und an einer anderen Stelle das neue Werkzeug ankuppeln. Die Werkzeugaufnahmen 33 ragen insoweit in die Bewegungsbahn der Werkzeugträger hinein. Um die Werkzeugträger in ihrer freien Beweglichkeit jedoch nicht zu behindern, können die Werkzeugaufnahmen 33 auch Schwenkarme aufweisen, mit denen sie aus dem Bewegungsraum der Werkzeugträger gedreht werden können.

Fig. 6 und 7 zeigen demgegenüber eine Variation der Werkzeugmagazine 31,31a. Die Werkzeugmagazine 31,31a werden hier von einer geschlossenen Reihe von Werkzeugaufnahmen 34 gebildet, die längs einer starren Ovalführung 35 quer zur Transportrichtung 39 bewegbar sind. Die Ovalführungen 35 sind ihrerseits an den Längstraversen 17, 17a in Transportrichtung 39 verfahrbar gelagert und weisen einen offenen Innenraum auf, so daß sie über die Werkzeugträger hinwegfahren können. In diesem Fall werden die Werkzeugmagazine 31,31a gegenüber den Werkzeugträgern in Längsrichtung positioniert und die alten Werkzeuge an die rotierenden Werkzeugaufnahmen 34 abgegeben, sowie neue angekuppelt. Wie aus Fig. 7 ersichtlich, können von einem Werkzeugmagazin 31 bei entsprechender Ausrichtung der Werkzeugaufnahmen 34 sowohl die vertikal ausgerichteten Werkzeugträger 22 wie a ch die horizontal ausgerichteten Werkzeugträger 41 bestückt werden. Außerdem können die Werkzeugträger 23 der oberen Ebene aus dem unteren Werkzeugmagazin 31 bestückt werden, wenn die Kupplung des Werkzeuges 37a nach oben gerichtet ist.

Um Behinderungen zu vermeiden, sind die Abstände der Längstraversen 17,17a von der Palette 4 größer als im Ausführungsbeispiel der Fig. 3 bis 5 gewählt. Im weiteren sind die Längstraversen 17,17a auch beidseits verlängert und bieten damit den Werkzeugmagazinen 31,31a Wartepositionen, in denen sie sich außerhalb der Palette 4 und des Arbeitsbereiches der Werkzeugträger befinden.

Fig. 6 und 7 zeigen außerdem in Variation zu Fig. 3 bis 5 eine Pkw-Bodengruppe 53 als zu schweißendes Bauteil, das zudem von Typvarianten abhängige Bohrungen erhält. Diese werden durch ein zu wechselndes Stanzwerkzeug (nicht dargestellt) eingebracht.

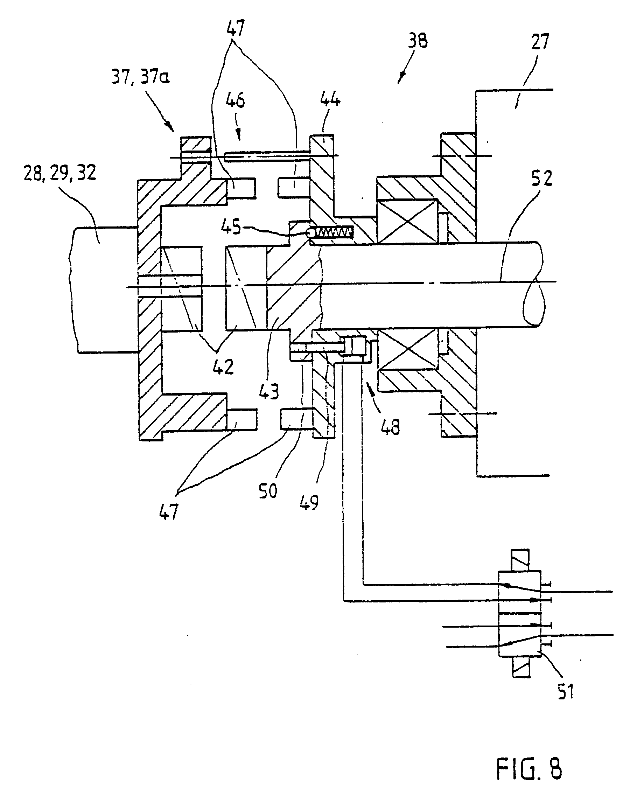

Fig. 8 zeigt eine automatische Kupplung 37,37a,38, die einen selbsttätigen Wechsel der Werkzeuge ermöglicht. Der Trägerkopf 27 der Werkzeugträger weist dazu einen nicht dargestellten Drehantrieb auf, auf dessen Abtriebswelle das Kupplungsteil 38 drehschlüssig sitzt. Am Werkzeug 28,29, 32 ist demgegenüber das Kupplungsteil 37 drehfest angeordnet. Das Kupplungsteil 37,37a,38 weist Anschlüsse 47 für alle Betriebsmittel des Werkzeugs auf. Über diese Anschlüsse 47 werden Steuersignale und Energie für das Werkzeug übertragen, das selbst eine Beweglichkeit in weiteren Achsen, sowie entsprechende Antriebe aufweisen kann. Desgleichen wird über die Anschlüsse 47 auch Schweißstrom und Kühlmittel für Schweißzangen, Druckluft oder Hydrauliköl für die Betätigung von Spannern oder dergleichen andere Betriebsmittel übertragen. Den Trägerköpfen 27 werden die Betriebsmittel jeweils über Schleppleitungen, Schleifkontakte oder dergleichen andere Organe zugeleitet.

Die Kupplung 37,37a,38 ist als geradgeführte Steckkupplung ausgebildet, bei der die Anschlußteile 47 ineinander eingeführt werden und sich im Falle der Verbindung flüssiger oder gasförmiger Medien dabei gegenseitig öffnen. Bei geöffneter Kupplung sind in diesem Falle die Anschlüsse 47 selbsttätig geschlossen. Die Verbindung der Kupplungsteile 37,37a,38 erfolgt über eine Bajonett-Gewindeanordnung 42. Zum Ankuppeln wird das Kupplungsteil 38 in die Kupplungsposition verdreht und dann vom Trägerkopf soweit dem Kupplungsteil 37,37a genähert, daß die Bajonett-Gewindeanordnung 42 in Bereitschaftsposition kommt und eine Drehsperre 46 am Kupplungsteil 38 in eine entsprechende Gegenbohrung am Kupplungsteil 37 greift. Auf diese Weise ist die Geradführung sichergestellt, die für eine Steckverbindung der Anschlüsse 47 notwendig ist. Anschließend wird das Innenteil 43 gedreht und die Bajonett-Gewindeanordnung 42 in Eingriff gebracht. Dazu ist das Innenteil 43 in einem Außenteil 44, des die Drehsperre 46 trägt, drehbar gelagert und wird durch federbelastete, lösbare Arretierungen 45 in der Anfangs- und Endstellung der Drehbewegung mit dem Außenteil 44 verbunden. Die Drehsperre 46 steht einem Mitdrehen des Außenteiles 44 entgegen, mit der Folge, daß die Arretierung 45 sich löst, wenn das Innenteil 43 gegenüber dem feststehenden Außenteil 44 gedreht wird und die Bajonett-Gewindeanordnung 42 die Kupplungsteile 37,37a,38 fest miteinander verbindet. Zum Abkuppeln geht der vorbeschriebene Vorgang in umgekehrter Reihenfolge vor sich. Die Werkzeuge sind mit ihren Kupplungen 37 in den Werkzeugaufnahmen 34 in Kupplungsposition vorpositioniert und drehfest gehalten.

Besteht die Gefahr, daß durch größere Torsionskräfte auf die Werkzeuge um die Mittelachse 52 die Bajonett-Gewindeanordnung 42 gelöst werden könnte, so wird allein oder zusätzlich eine z.B. elektropneumatisch gesteuerte Arretierung 48 angeordnet. Der als Arretierbolzen 49 ausgebildete Kolben wird durch das doppelt wirkende Magnetventil 51 mittels Druckluft am Anfang und Ende der Drehbewegung des Innenteils 43 im Außenteil 44 aus der Arretierbohrung 50 gezogen bzw. zur Arretierung hineingeschoben.

Stückliste

| | |
|---|---|
| 1 | Tranferstraße |
| 2 | Rüststation |
| 3 | Bearbeitungsstation |
| 4 | Werkstückträger, Palette |
| 5 | Baugruppe, Seitenwand 2-türig |
| 6 | Baugruppe, Seitenwand 4-türig |
| 7 | Einzelteil, Dachholm vorn |
| 8 | Einzelteil, Dachholm hinten |
| 9 | Einzelteil, Dachholm vorn |
| 10 | Einzelteil, Türholm |
| 11 | Einzelteil, Dachholm hinten |
| 12 | Einzelteil, Bodenteil |
| 13 | Einzelteil, Bodenteil |
| 14 | Lagerarm |
| 15 | Maschinengestell |
| 16 | Pfosten |
| 17 | Längstraverse, unten |
| 17a | Längstraverse, oben |
| 18 | Quertraverse, unten |
| 18a | Quertraverse, oben |
| 19 | Quertraverse, unten |
| 19a | Quertraverse, oben |
| 20 | Stelltrieb |
| 21 | Laufwerk |
| 22 | Werkzeugträger, unten |
| 22a | Werkzeugträger, unten |
| 22b | Werkzeugträger, unten |
| 22c | Werkzeugträger, unten |
| 23 | Werkzeugträger, oben |
| 23a | Werkzeugträger, oben |
| 24 | Stelltrieb |
| 25 | Stelltrieb |
| 26 | Laufwerk |
| 27 | Trägerkopf |
| 28 | Werkzeug, Spannvorrichtung |
| 28a | Werkzeug, Spannvorrichtung |
| 28b | Werkzeug, Spannvorrichtung |
| 28c | Werkzeug, Spannvorrichtung |
| 29 | Werkzeug, Schweißzange |
| 29a | Werkzeug, Schweißzange |
| 30 | Palettanführung |
| 30a | Rolle |
| 31 | Werkzeugmagazin, unten |
| 31a | Werkzeugmagazin, oben |
| 32 | Wechsel-Werkzeug |
| 33 | Werkzeugaufnahme |
| 34 | Werkzeugaufnahme |
| 35 | Ovalführung |
| 36 | Laufwerk |
| 37 | Kupplung, Werkzeug , 37 a Kupplung , Werkzeug (nach oben gerichtet) |
| 38 | Kupplung, Werkzeugträger |
| 39 | Transportrichtung |
| 40 | Hochtraverse |
| 41 | Werkzeugträger |
| 42 | Bajonett-Gewindeanordnung |
| 43 | Innenteil |
| 44 | Außenteil |
| 45 | federbelastete Arretierung |
| 46 | Drehsperre |
| 47 | Anschluß |
| 48 | elektropneumatisch gesteuerte Arretierung |
| 49 | pneumatisch gesteuerter Arretierbolzen |
| 50 | Arretierbohrung |
| 51 | Magnetventil |
| 52 | Mittelachse |
| 53 | Pkw-Bodengruppe |
| 54 | Greifer |
| 55 | Greifer |
| 56 | Hubeinrichtung |

## Ansprüche

1. Verfahren zum automatischen Fügen und Bearbeiten, insbesondere Zuordnen, Heften und Schweißen, von unterschiedlichen Fahrzeugkarosserien oder deren Baugruppen in einer Transferstraße mit umrüstbaren Bearbeitungsstationen, wobei die Fahrzeugkarosserien oder deren Baugruppen jeweils aus mehreren Einzelteilen bestehen, die auf einem Werkstückträger im ungefügten Zustand lose und vorkommissioniert abgelegt sind und der Bearbeitungstation zugeführt werden, wo sie zentriert, gespannt, geheftet und fertiggeschweißt werden, wobei die Einzelteile in der Bearbeitungsstation in einem ersten Arbeitsgang vor dem Fertigschweißen aus ihrer Ablageposition auf dem Werkstückträger durch zugeführte Werkzeuge zum Halten oder Spannen in die Fügeposition zu anderen Einzelteilen gebracht, dort gehalten und geheftet und/oder fertiggeschweißt werden.

2. Verfahren zum automatischen Fügen und Bearbeiten, insbesondere Zuordnen, Heften und Schweißen, von unterschiedlichen Fahrzeugkarosserien oder deren Baugruppen in einer Transferstraße mit umrüstbaren Bearbeitungsstationen, wobei die Fahrzeugkarosserien oder deren Baugruppen jeweils aus mehreren Einzelteilen bestehen, die auf einem Werkstückträger in geordneter Lage gehalten sind und den Bearbeitungsstationen zugeführt werden, wo die Einzelteile von mehreren einzeln für sich und dreidimensional beweglichen Werkzeugträgern mit angekuppelten Werkzeugen zentriert, gespannt, geheftet und/oder fertiggeschweißt werden, wobei in der Bearbeitungsstation während des Betriebs zur Umrüstung auf eine andere Fahrzeugkarosserie oder Baugruppe die Werkzeuge von den Werkzeugträgern einzeln abgekuppelt und gegen andere in der Bearbeitungsstation magazinierte Werkzeuge ausgetauscht werden, wobei mosaikartig ein neuer Werkzeugsatz zusammengesetzt wird.

3. Umrüstbare Bearbeitungsstation (3) in einer Transferstraße (1) zum automatischen Fügen und Bearbeiten, insbesondere Zuordnen, Heften und Schweißen, von unterschiedlichen Fahrzeugkarosserien oder deren Baugruppen (5,6), die jeweils aus mehreren Einzelteilen (7-13) bestehen und auf einem Werkstückträger (4) in geordneter Lage der Bearbeitungsstation (3) zugeführt werden, wobei die Bearbeitungsstation (3) mehrere, einzeln für sich und dreidimensional bewegliche Werkzeugträger (22,23,41) mit frei austauschbaren Werkzeugen (28,29,32) zum Greifen, Transportieren, Spannen oder Bearbeiten der Einzelteile (7-13) sowie ein oder mehrere Werkzeugmagazine (31,31a) aufweist, und wobei ferner die Werkzeugträger (22,23,41) und die Werkzeuge (28,29,32) Kupplungen (37,37a,38) mit Anschlüssen (47) für die Betriebsmittel aufweisen, so daß jedes Werkzeug mit jedem Werkzeugträger kuppelbar ist.

4. Bearbeitungsstation nach Anspruch 3, bei der die Werkzeugträger (22,23) gruppenweise in einer Ebene parallel und mit Abstand über und/oder unter dem Werkstückträger (4) am Maschinengestell (15) der Bearbeitungsstation (3) beweglich geführt und angetrieben sind und selbst mindestens einen dritten translatorischen Freiheitsgrad aufweisen.

5. Bearbeitungsstation nach Anspruch 4, bei der zusätzliche Werkzeugträger (41) gruppenweise in mindestens einer weiteren Bewegungsebene seitlich und mit Abstand zum Werkstückträger (4) am Maschinengestell (15) beweglich geführt und angetrieben sind.

6. Bearbeitungsstation nach Anspruch 4, die zu beiden Seiten der Transportbahn für den Werkstückträger (4) in jeder Bewegungsebene Längstraversen (17,17a) aufweist, auf denen eine oder mehrere Quertraversen (18,18a,19,19a) beweglich gelagert sind, auf denen wiederum mindestens ein Werkzeugträger (22,23) fahrbar angeordnet ist.

7. Bearbeitungsstation nach Anspruch 5, bei der die zusätzlichen Werkzeugträger (41) auf einer oder mehreren Hochtraversen (40) verfahrbar sind, die ihrerseits beweglich an Längstraversen gelagert sind.

8. Bearbeitungsstation nach Anspruch 6 oder 7, bei der an gegenüberliegenden Seiten der Quer- und Hochtraversen (18,19,40) ein oder mehrere Werkzeugträger (22,23,41) gelagert sind.

9. Bearbeitungsstation nach Anspruch 4 bis 8, bei der als Antrieb für die Werkzeugträger (22,23,41) sowie die Quer- und Hochtraversen (18,19,40) Stelltriebe (20,24), vorzugsweise in Verbindung mit spielfreien Zahnriemen- oder Zahnstangentrieben, vorgesehen sind.

10. Bearbeitungsstation nach Anspruch 4, bei der am Laufwerk (26) der Werkzeugträger (22,23,41) über einen Stelltrieb (25) ein Trägerkopf (27) höhenverstellbar gelagert ist.

11. Bearbeitungsstation nach Anspruch 3, bei der die Kupplungen (37,37a,38) als außenseitig (44) geradgeführte Steckkupplungen ausgebildet sind und innenseitig (43) als Verbindungsmittel eine vom Werkzeugträger (22,23,41) her angetriebene, gegenüber einer Drehsperre (46) ausrückbare Bajonett-Gewindeanordnung (42) aufweisen.

12. Bearbeitungsstation nach Anspruch 11, bei der die werkzeugträgerseitige Kupplung (38) ein Außenteil (44) und ein darin drehbar geführtes Innenteil (43) aufweist, die über eine federbelastete Kugelarretierung (45) und/oder einen steuerbaren, angetriebenen Arretierbolzen (49) miteinander im lösbaren Drehschluß verbunden sind.

13. Bearbeitungsstation nach Anspruch 3, 11 oder 12, bei der die Werkzeugträger (22,23,41) zwei oder mehr Kupplungen (37, 37a,38) für mehrere Einzelwerkzeuge oder ein mehrteiliges Satzwerkzeug aus Einzelwerkzeugen aufweisen.

14. Bearbeitungsstation nach Anspruch 10 und 3, 11, 12 oder 13, bei der die Werkzeugträgerkupplungen (38) auf dem Trägerkopf (27) angeordnet sind.

15. Bearbeitungsstation nach Anspruch 3, bei der die Werkzeuge (28,29,32) zusätzliche Bewegungsachsen und eigene Antriebe besitzen.

16. Bearbeitungsstation nach Anspruch 3, bei der das Werkzeugmagazin (31,31a) eine ortsfeste, in Längsrichtung der Bearbeitungsstation (3) angeordnete Reihe von Werkzeugaufnahmen (33) aufweist, die seitlich in die Bewegungsebene der zugehörigen Werkzeugträger (22,23,41) ragen.

17. Bearbeitungsstation nach Anspruch 3, bei der das Werkzeugmagazin (31,31a) eine geschlossene Reihe von Werkzeugaufnahmen (34) aufweist, die entlang einer innen offenen Ovalführung (35) beweglich geführt sind, wobei die Ovalführung (35) in Richtung der Quertraversen (18,18a,19,19a) angeordnet und auf den Längstraversen (17,17a) mit ihrem Innenraum über die zugehörigen Werkzeugträger (22,23) verfahrbar ist.

18. Bearbeitungsstation nach Anspruch 17, bei der den Werkzeugträgern (22,23) jeder Bewegungsebene mindestens ein fahrbares Werkzeugmagazin (31,31a) zugeordnet ist, wobei für die Werkzeugmagazine auf den Längsträgern (17,17a) außerhalb des Werkstückträgers (4) Ruhepositionen vorgesehen sind.

19. Bearbeitungsstation nach Anspruch 3, bei der der Werkstückträger (4) als Palette ausgebildet ist und Einfachaufnahmen in Form von Lagerarmen (14) mit Schnappverbindungen zur Aufnahme der Einzelteile (7-13) aufweist.

20. Bearbeitungsstation nach Anspruch 3 oder 19, bei der die Einzelteile (7-13) in Nähe des Randes auf dem Werkstückträger (4) abgelegt sind.

## Claims

1. Method for the automatic joining and machining, in particular coordination, attachment and welding, of different vehicle bodies or their components in a transfer line with working stations which can be retooled, the vehicle bodies or their components in each case consisting of a plurality of individual parts, which are placed in the unjoined state, loosely and pre-commissioned, on a work-piece support and are supplied to the working station, where they are centered, clamped, attached and final welded, in the working station, in a first operation before final welding, the individual parts being brought out of their deposited position on the work-piece support by supplied tools for holding or clamping, into the position for joining to other individual parts, are held there and attached and/or final welded.

2. Method for the automatic joining and machining, in particular coordination, attachment and welding of different vehicle bodies or their components in a transfer line with working stations which can be retooled, the vehicle bodies or their components in each case consisting of a plurality of individual parts, which are held on a work-piece support in an orderly position and supplied to the working stations, where the individual parts are centered, clamped, attached and/or final welded by a plurality of tool supports with connected tools, able to move individually and three-dimensionally, in the working station, during the operation for retooling to another vehicle body or component, the tools being disconnected individually from the tool supports and exchanged for other tools stored in the working station, a new set of tools being composed in the form of a mosaic.

3. Working station (3) which can be retooled in a transfer line (1) for the automatic joining and machining, in particular coordination, attachment and welding, of different vehicle bodies or their components (5, 6), which each consist of a plurality of individual parts (7-13) and are supplied on a work-piece support (4) in an orderly position to the working station (3), the working station (3) comprising a plurality of tool supports (22, 23, 41) able to move individually and three-dimensionally, with freely exchangeable tools (28, 29, 32) for gripping, conveying, clamping or machining the individual parts (7-13) as well as one or more tool magazines (31, 31a), and furthermore the tool supports (22, 23, 41) and the tools (28, 29, 32) comprising couplings (37, 37a, 38) with connections (47) for the operating means, so that each tool can be connected to each tool support.

4. Working station according to Claim 3, in which the tool supports (22, 23) are guided to move and driven in groups in one plane parallel to and at a distance above and/or below the work-piece support (4) on the machine frame (15) of the working station (3) and themselves have at least one third translatory degree of freedom.

5. Working station according to Claim 4, in which additional tool supports (41) are guided to move and are driven on the machine frame (15) in groups in at least one further plane of movement laterally and at a distance from the work-piece support (4).

6. Working station according to Claim 4, which on both sides of the conveying path for the work-piece support (4) comprises longitudinal members (17, 17a) in each plane of movement, on which one or more cross-members (18, 18a, 19, 19a) are mounted to move, on which at least one tool support (22, 23) is once more arranged to travel.

7. Working station according to Claim 5, in which the additional tool supports (41) are able to travel on one or more elevated cross-members (40), which are in turn mounted to move on longitudinal members.

8. Working station according to Claim 6 or 7, in which one or more tool supports (22, 23, 41) are mounted on opposite sides of the cross-members and elevated members (18, 19, 40).

9. Working station according to Claims 4 to 8, in which servo drives (20, 24), preferably in conjunction with toothed belt or toothed rack drives which are free from play, are provided as the drive for the tool supports (22, 23, 41) and the cross-members and elevated members (18, 19, 40).

10. Working station according to Claim 4, in which a support head (27) is mounted to be vertically adjustable on the trolley (26) of the tool support (22, 23, 41), by way of a servo drive (25).

11. Working station according to Claim 3, in which the couplings (37, 37a, 38) are constructed on the outside (44) as aligned plug-in couplings and on the inside (43) as connecting means, comprise a bayonet/thread arrangement (42) driven by the tool support (22, 23, 41) and able to be disengaged opposite a rotary locking device (46).

12. Working station according to Claim 11, in which the coupling (38) adjacent the tool support comprises an outer part (44) and an inner part (43) guided to rotate therein, which are connected to each other with a releasable rotary engagement by way of a spring-loaded ball locking device (45) and/or a controllable, driven locking bolt (49).

13. Working station according to Claim 3, 11 or 12, in which the tool supports (22, 23, 41) comprise two or more couplings (37, 37a, 38) for a plurality of individual tools or a multi-part set of tools consisting of individual tools.

14. working station according to Claims 10 and 3, 11, 12 or 13, in which the tool support couplings (38) are arranged on the support head (27).

15. Working station according to, Claim 3, in which the tools (28, 29, 32) have additional axes of movement and individual drives.

16. Working station according to Claim 3, in which the tool magazine (31, 31a) comprises a stationary row of tool holders (33) arranged in the longitudinal direction of the working station (3), which tool holders project laterally into the plane of movement of the associated tool support (22, 23, 41).

17. working station according to Claim 3, in which the tool magazine (31, 31a) comprises a closed row of tool holders (34), which are guided to move along an oval guide (35) which is open on the inside, the oval guide (35) being arranged in the direction of the cross-members (18, 18a, 19, 19a) and being able to travel on the longitudinal members (17, 17a) with their interior above the associated tool support (22, 23).

18. Working station according to Claim 17, in which at least one movable tool magazine (31, 31a) is associated with the tool supports (22, 23) of each plane of movement, inoperative positions being provided for the tool magazines on the longitudinal members (17, 17a) outside the workpiece support (4).

19. Working station according to Claim 3, in which the work-piece support (4) is constructed as a pallet and comprises single holders in the form of bearing arms (14) with snap connections for receiving the individual parts (7-13).

20. Work station according to Claim 3 or 19, in which the individual parts (7-13) are placed on the work-piece support (4) in the vicinity of the edge.

## Revendications

1. Procédé pour assembler et traiter, notamment associer, agrafer et souder, automatiquement différentes carrosseries de véhicules ou leurs modules dans une ligne de transfert comportant des postes de traitement, dont l'équipement peut être modifié, et selon lequel les carrosseries de véhicules ou leurs modules sont constitués respectivement par plusieurs pièces individuelles, qui sont disposés librement à en vrac, en étant préalablement préparées, sur un support des pièces à traiter et sont envoyés au poste de traitement, où ils sont centrés, serrés, agrafés et soudés, et selon lequel dans le poste de traitement, les pièces individuelles sont amenées, lors d'une première phase opératoire avant le soudage terminal, depuis leur position de dépôt sur le support des pièces à traiter, jusque dans la position d'assemblage avec d'autres pièces individuelles, à l'aide d'outils de maintien ou de serrage approchés, y sont maintenues et agrafées et/ou soudées de façon définitive.

2. Procédé pour assembler et traiter, notamment associer, agrafer et souder, automatiquement différentes carrosseries de véhicules ou leurs modules dans une ligne de transfert comportant des postes de traitement, dont l'équipement peut être modifié, et selon lequel les carrosseries de véhicules ou leurs modules sont constitués respectivement par plusieurs pièces individuelles, qui sont maintenues dans une position coordonnée sur un support des pièces à traiter et sont envoyées aux postes de traitement, où les pièces individuelles de plusieurs porte-outils, qui sont mobiles individuellement et d'une manière tridimensionnelle et auxquels sont accouplés des outils, sont centrées, serrées, agrafées et/ou soudées de façon définitive, et dans lequel, dans le poste de traitement, au cours du fonctionnement pour passer à une autre carrosserie de véhicule ou à un autre module, les outils sont désaccouplés individuellement des porte-outils et sont remplacés par d'autres outils rangés dans le poste de traitement, un nouvel ensemble d'outils étant rassemblé selon une disposition mosaïque.

3. Poste de traitement (3), dont l'équipement peut être modifié et qui est placé dans une ligne de transfert (1) pour réunir et traiter, notamment associer, agrafer et souder, automatiquement différentes carrosseries de véhicules ou leurs modules (5,6), qui sont constitués respectivement par plusieurs pièces individuelles (7-13) et sont amenés dans une position rangée, sur un support (4) de pièces à traiter, au poste de traitement (3), ce poste de traitement (3) comportant plusieurs porte-outils (22,23,41) mobiles individuellement et d'une manière tridimensionnelle et comportant des outils (28,29,32) pouvant être librement permutés et servant à saisir, transporter, serrer ou traiter les pièces individuelles (7-13), ainsi qu'un ou plusieurs magasins à outils (31,31a), et dans lequel en outre les porte-outils (22,23,41) et les outils (28,29,32) possédant des accouplements (37,37a,38) comportant des raccords (47) pour les agents de fonctionnement, de sorte que chaque outil peut être accouplé à chaque porte-outils.

4. Poste de traitement suivant la revendication 3, dans lequel les porte-outils (22,23) sont guidés en déplacement et sont entraînés, par groupes, parallèlement dans un plan et à distance au-dessus et/ou au-dessous du support (4) des pièces à traiter sur le bâti (15) de la machine du poste de traitement (3), et possèdent même au moins un troisième degré de liberté en translation.

5. Poste de traitement suivant la revendication 4, dans lequel des porte-outils supplémentaires (41) sont guidés en déplacement et entraînés, par groupes, dans au moins un autre plan de déplacement, latéralement et à distance du support (4) des pièces à traiter, sur le bâti (15) de la machine.

6. Poste de traitement suivant la revendication 4, qui comporte, des deux côtés de la voie de transport pour les supports (4) des pièces à traiter, dans chaque plan de déplacement, des longerons (17,17a), sur lesquels sont montées, de manière à pouvoir se déplacer, une ou plusieurs traverses (18,18a,19,19a), sur lesquelles à nouveau un porte-outils (22,23) est monté de manière à pouvoir se déplacer.

7. Poste de traitement suivant la revendication 5, dans lequel les porte-outils supplémentaires (41) sont déplaçables sur un ou plusieurs montants verticaux (40), qui pour leur part sont montés de manière à être déplaçables sur des longerons.

8. Poste de traitement suivant la revendication 6 ou 7, dans lequel un ou plusieurs porte-outils (22,23,41) sont montés sur des côtés opposés des traverses et des montants (18,19,40).

9. Poste de traitement suivant les revendications 4 à 8, dans lequel il est prévu, comme dispositif d'entraînement pour les porte-outils (22,23,41) ainsi que pour les traverses et les montants (18,19,40), des servomoteurs (20, 24), de préférence en liaison avec des mécanismes d'entraînement à courroie dentée ou à crémaillère fonctionnant sans jeu.

10. Poste de traitement suivant la revendication 4, dans lequel une tête de support (27) est montée sur le chariot (26) des porte-outils (22,23,41), de manière à être réglable en hauteur à l'aide d'un servomoteur (25).

11. Poste de traitement suivant la revendication 3, dans lequel les accouplements (37,37a,38) sont agencés sous la forme d'accouplements enfichables guidés de façon rectiligne extérieurement (44) et comportent, sur le côté intérieur (43), en tant que moyens de liaison, un dispositif fileté à baïonnette (42), qui peut être entraîné à partir du porte-outils (22,23,41) et peut être dégagé d'un dispositif de blocage en rotation (46).

12. Poste d'usinage suivant la revendication 11, dans lequel l'accouplement (38), situé du côté du porte-outils comporte une partie extérieure (44) et une partie intérieure (43) guidée avec possibilité de rotation dans la partie extérieure, les parties extérieure et intérieure étant réunies entre elles selon une liaison amovible de blocage en rotation, au moyen d'un dispositif de blocage à billes (45) chargé par un ressort et/ou d'une goupille de blocage (49) entraînée et commandable.

13. Poste de traitement suivant la revendication 3, 11 ou 12, dans lequel les porte-outils (22,23,41) comportent deux ou un plus grand nombre d'accouplements (33,37a,38) pour plusieurs outils individuels ou une unité à plusieurs éléments, constituée par plusieurs outils individuels.

14. Poste de traitement suivant les revendications 10 et 3,11,12,13, dans lequel les accouplements (38) des porte-outils sont disposés sur la tête de support (27).

15. Poste de traitement suivant la revendication 3, dans lequel les outils (28,29,32) possèdent des axes supplémentaires de déplacement et des dispositifs propres d'entraînement.

16. Poste de traitement suivant la revendication 3, dans lequel le magasin à outils (31,31a) comporte un ensemble fixe, disposé dans la direction longitudinale du poste de traitement (3), de logements (33) pour outils, qui pénètrent latéralement dans le plan de déplacement des porte-outils associés (22,23,41).

17. Poste de traitement suivant la revendication 1, dans lequel le magasin à outils (31,31a) possède un ensemble fermé sur lui-même de logements (34) pour outils, qui sont guidés en déplacement le long d'un guide intérieur ovale (35) ouvert en direction de l'intérieur, le guide ovale (35) étant disposé dans la direction des traverses (18,18a,19,19a) et étant déplaçable sur les longerons (17,17a), l'intérieur du guide se situant au-dessus des porte-outils associés (22,23).

18. Poste de traitement suivant la revendication 17, dans lequel aux porte-outils (22,23) de chaque plan de déplacement est associé au moins un magasin à outils (31,31a) mobile, des positions de repos étant prévues, à l'extérieur du support des pièces à traiter, pour les magasins à outils sur les longerons (17,17a).

19. Poste de traitement suivant la revendication 3, dans lequel le support (4) des pièces à traiter est agencé sous la forme d'une palette et comporte des logements individuels se présentant sous la forme de bras de support (14) équipés de liaisons à encliquetage brusque et servant à loger les pièces individuelles (7-13).

20. Poste de traitement suivant la revendication 3 ou 19, dans lequel les pièces individuelles (7-13) sont déposées à proximité du bord sur le support (4) des pièces à traiter.

FIG.1

FIG. 2

FIG. 5

FIG. 3

EP 0 214 199 B1

FIG. 4

FIG. 6

FIG.7

FIG. 8

FIG. 9